(19)

Europäisches
Patentamt
European
Patent Office
Office européen
des brevets

(11) **EP 4 450 153 A1**

(12) **EUROPEAN PATENT APPLICATION**

(43) Date of publication:
**23.10.2024 Bulletin 2024/43**

(21) Application number: **23168249.3**

(22) Date of filing: **17.04.2023**

(51) International Patent Classification (IPC):
**B01J 4/00** (2006.01)        **B01J 19/02** (2006.01)
**C01B 21/38** (2006.01)        **C01C 1/18** (2006.01)
**C02F 1/66** (2023.01)         **C05C 1/00** (2006.01)

(52) Cooperative Patent Classification (CPC):
**B01J 4/002; B01J 4/004; B01J 19/02; C01B 21/48;**
**C01C 1/185; C02F 1/66;** B01J 2219/00177;
C02F 2303/08; C05C 1/00

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Yara International ASA**
**0277 Oslo (NO)**

(72) Inventors:
• **KLAVENES, Anita**
  **3937 Porsgrunn (NO)**
• **BUJALSKI, Jakub**
  **3914 Porsgrunn (NO)**

(74) Representative: **De Clercq & Partners**
**Edgard Gevaertdreef 10a**
**9830 Sint-Martens-Latem (BE)**

(54) **NEUTRALISATION REACTOR AND METHOD OF OPERATING THEREOF**

(57) The present disclosure relates to an acid-base neutralizer. The base is distributed inside the reactor and the acid is added through an acid sparger at the bottom of a lower cylindrical section of the reactor after dilution with the neutralized product in an injection pipe. The acid sparger is fully located inside a vertical part of the injection pipe and both the acid sparger and the vertical section of the injection pipe are coaxially arranged with the vertical axis defined by the lower cylindrical section of the reactor.

EP 4 450 153 A1

**Description**

**Field of the invention**

The present disclosure relates to the field of neutralization reactors and their method of operating.

**Background**

In chemistry, neutralisation is a chemical reaction in which acid and a base react quantitatively with each other. In a reaction in water, neutralization results in there being no excess of hydrogen or hydroxide ions present in the solution. The pH of the neutralized solution depends on the acid strength of the reactants.

Historically, this reaction was represented as: acid + base (alkali) $\rightarrow$ salt + water

The statement is still valid as long as it is understood that in an aqueous solution the substances involved are subject to dissociation, which changes the ionization state of the substances. The arrow sign, $\rightarrow$, is used because the reaction is complete, that is, neutralization is a quantitative reaction.

A more general definition is based on Brønsted-Lowry acid-base theory:

$$AH + B \rightarrow A + BH$$

Electrical charges are omitted from generic expressions such as this, as each species A, AH, B, or BH may or may not carry an electrical charge.

After an acid AH has been neutralized there are no molecules of the acid (or hydrogen ions produced by dissociation of the molecule) left in solution.

When an acid is neutralized the amount of base added to it must be equal to the amount of acid present initially. This amount of base is said to be the equivalent amount. In a titration of an acid with a base, the point of neutralization can also be called the equivalence point. The quantitative nature of the neutralization reaction is most conveniently expressed in terms of the concentrations of acid and alkali. At the equivalence point:

$$\text{volume (acid)} \times \text{concentration (H}^+ \text{ ions from dissociation)} = \text{volume (base)} \times \text{concentration (OH}^- \text{ ions)}$$

In general, for an acid $AH_n$ at concentration $c_1$ reacting with a base $B(OH)_m$ at concentration $c_2$ the volumes are related by: $n\, v_1\, c_1 = m\, v_2\, c_2$

*Strong acids and strong bases*

A strong acid is one that is fully dissociated in aqueous solution. For example, hydrochloric acid, HCl, is a strong acid: $HCl(aq) \rightarrow H^+(aq) + Cl^-(aq)$

A strong base is one that is fully dissociated in aqueous solution. For example, sodium hydroxide, NaOH, is a strong base: $NaOH(aq) \rightarrow Na^+(aq) + OH^-(aq)$

Therefore, when a strong acid reacts with a strong base the neutralization reaction can be written as $H^+ + OH^- \rightarrow H_2O$

For example, in the reaction between hydrochloric acid and sodium hydroxide the sodium and chloride ions, $Na^+$ and $Cl^-$ take no part in the reaction. The reaction is consistent with the Bronsted-Lowry definition because in reality the hydrogen ion exists as the hydronium ion, so that the neutralization reaction may be written as $H_3O^+ + OH^- \rightarrow H_2O + H_2O$

When a strong acid is neutralized by a strong base there are no excess hydrogen ions left in the solution. The solution is said to be neutral as it is neither acidic nor alkaline. The pH of such a solution is close to a value of 7; the exact pH value is dependent on the temperature of the solution. Neutralization is an exothermic reaction. The standard enthalpy change for the reaction $H^+ + OH^- \rightarrow H_2O$ is -57.30 kJ/mol.

*Weak acids and strong bases*

A weak acid HA is one that does not dissociate fully when it is dissolved in water. Instead, an equilibrium mixture is formed: $HA + H_2O \rightleftharpoons H_3O^+ + A^-$

The pH of the neutralized solution of a weak acid HA resulting from

$$HA + OH^- \rightarrow H_2O + A^-$$

is not close to 7, as with a strong acid, but depends on the acid dissociation constant, $K_a$, of the acid. It is within the routine skill of the skilled person to calculate the pH at the end-point or equivalence point in a titration.

In general, for the neutralization of a weak acid HA:

- The pH at the end-point depends mainly on the strength of the acid, $pK_a$.
- The pH at the end-point is greater than 7 and increases with increasing concentration of the acid.

*Strong acids and weak bases*

The situation is analogous to that of weak acids and strong bases: $B + H_3O^+ \rightleftharpoons BH^+ + H_2O$ Amines are examples of weak bases. The pH of the neutralized solution depends on the acid dissociation constant of the protonated base, $pK_a$, or, equivalently, on the base association constant, $pK_b$.

From the above chemical considerations, it is clear that the reaction of an acid and a base directly impacts the temperature, chemical content and pH of the process, as is common general knowledge of the skilled person. Therefore, the engineering and design of a reactor affects the mixing and, hence, the reaction of the acid and the base, and thus impacts the temperature, chemical content and pH of the process.

For instance, a combination of the pH and the temperature can result in corrosion. Generally, the higher the pH and the higher temperature, the more likely is a material such as stainless steel to corrode.

AU654632B1 (Thyssenkrupp, 1993) discloses a reactor used for the production of an ammonium nitrate solution by neutralization of aqueous nitric acid with the aid of an ammonia containing gas, said reactor comprising in sequence: a bottom cone for receiving recycled ammonium nitrate solution, said cone having injection nozzles arranged about the perimeter of the cone for introducing aqueous nitric acid for admixture with the recycled ammonium nitrate solution; a premixing zone located adjacent said bottom cone and adapted to receive the admixture and initially mix the recycled ammonium nitrate solution and aqueous nitric acid; a final mixing zone located adjacent said premixing zone and adapted to receive and homogeneously mix the premixed recycled ammonium nitrate solution and aqueous nitric acid; a downstream tubed chamber located adjacent the final mixing zone, said chamber containing a bundle of perforated tubes for introducing the ammonia containing gas for admixture with the mixed recycle ammonium nitrate solution and aqueous nitric acid in a gas-to-liquid admixing zone; and a reaction chamber located adjacent the downstream tubed chamber for reaction in a reaction zone of the mixed recycle ammonium nitrate solution and aqueous nitric acid with the ammonia containing gas to produce an ammonium nitrate solution in a reaction zone.

There remains a need for an improved neutralisation reactor for a solution to more precisely introduce the acid in a neutraliser, in order to avoid the corrosion of the components of the neutralisation reactor by the chemical components inside the neutralisation reactor.

**Summary**

In one aspect of the disclosure, a system for reacting an acid with a base, thereby providing a neutralised product and steam, is disclosed. The system comprises:

- a reactor for reacting the base and the acid, comprising a cylindrical section defining a central vertical axis in the lower section of the reactor and comprising a reactor upper section located on top of the cylindrical lower section, wherein said cylindrical section comprises a top and a bottom section;
- a base distribution system comprising horizontal circular rings on top of each other, located in the bottom section of the cylindrical section, concentric around the vertical axis and comprising holes arranged for introducing the base along the height and towards the center of the cylindrical section;
- an injection pipe comprising a vertical section located below the cylindrical section of the reactor, wherein the vertical section is connected to the bottom section located below the base distribution system at an inlet of the reactor;
- an acid sparger located inside the vertical section of the injection pipe, wherein the acid sparger comprises holes arranged for uniformly sparging the acid inside the injection pipe;

wherein the reactor upper section is configured for disengagement of steam from the reactor, and wherein the reactor upper section has a first outlet for collecting the neutralized product and a second outlet connected to the injection pipe, such that neutralized product is recycled through the injection pipe back into the cylindrical section;

The system is characterized in that the acid sparger and the injection pipe are coaxially arranged with the vertical axis of the cylindrical section of the reactor.

The inventors have realized that by having the acid sparger and the injection pipe concentric around the vertical axis, the acid is diluted in the neutralized product, such that the pH and the temperature of the mixture of the acid and the neutralized product mixture entering the bottom section of the reactor is, in turn, such that the base distribution system is not corroded by the mixture. Further, the mixing of the mixture of the neutralized product and the acid with the base distributed inside the reactor is favoured, such that the formation of the neutralized product is, in turn, favoured.

In one embodiment according to the system of the disclosure, the distribution system is made of titanium.

In one embodiment according to the system of the disclosure, the base is ammonia, the acid is nitric acid and the neutralized product is ammonium nitrate.

In one embodiment according to the system of the disclosure, the number of rings ranges from 1 to 10.

In one embodiment according to the system of the disclosure, the rings have the same diameter, the overall distribution of the holes in the distribution system is symmetrical with respect to the vertical axis, such that the base is uniformly distributed along the height and towards the center of the cylindrical section.

In one embodiment according to the system of the disclosure:

- the cylindrical section has height to diameter ratio ranging from 1.3 to 2.7;
- the vertical section of the injection pipe has a height to diameter ratio ranging from 2.3 to 5.6; and
- the acid sparger has a height to diameter ration ranging from 1.0 to 1.4.

In one embodiment according to the system of the disclosure, the distance between the uppermost holes of the acid sparger and the inlet of the reactor ranges from 2 to 10 times the diameter of the vertical section of the injection pipe.

In one embodiment according to the system of the disclosure, the reactor is configured for separating the steam from the neutralized product in the upper section of the reactor, such that the neutralized product flows inside the reactor downwards to the bottom section of the cylindrical section.

In one aspect of the disclosure, a method for producing a neutralized product in a system according to the system of the disclosure, is disclosed. The method comprises the steps of:

- injecting the base in the distribution system;
- injecting the acid in the acid sparger; and
- recycling the neutralized product from inside the cylindrical section into the injection pipe and back into the cylindrical section.

In one embodiment according to the method of the disclosure, the base is ammonia, the acid is nitric acid and the neutralized product is ammonium nitrate.

In one embodiment according to the method of the disclosure, the acid is injected after dilution in water such that the acid injected is 60% by weight of the acid in water, at a temperature ranging from 20 to 45 °C, the base is injected at a mass flow rate equal to 0.15 to 0.17 times the mass flow rate for the diluted acid and at a temperature ranging from 60 to 90 °C, and the neutralized product is flowing in the injection pipe at a mass flow rate ranging from 1 to 2.6 times the mass flow rate for the diluted acid.

In one embodiment according to the method of the disclosure, the method further comprises the step of introducing a coolant in the reactor, by mixing the coolant with the neutralized product being recycled or introducing the coolant inside the injection pipe, or introducing the coolant directly inside the reactor, such as to control the temperature inside the reactor between 150 and 180 °C.

In one embodiment according to the method of the disclosure, the sparged acid and the neutralized product reside from 1.2 to 2.1 seconds between the uppermost holes of the acid sparger and the inlet of the reactor.

In one aspect of the disclosure, the use of the system of the disclosure for performing the method of the disclosure is disclosed.

In one aspect of the disclosure, a method for revamping a system for reacting a base and an acid, comprising:

- a reactor for reacting the base and the acid, comprising a cylindrical lower section defining a central vertical axis and comprising a reactor upper section located on top of the cylindrical section, wherein said cylindrical section comprises a top and a bottom section;;
- a base distribution system comprising horizontal circular rings on top of each other, located in the bottom section of the cylindrical section cylindrical section, concentric around the vertical axis and comprising holes arranged for introducing the base along the height and towards the center of the cylindrical section;
- an injection pipe connected to the bottom section located below the distribution system at an inlet of the reactor;
- an acid sparger located inside the injection pipe, wherein the acid sparger comprises holes arranged for uniformly sparging the acid inside the injection pipe, wherein the sparger is inclined with respect to the vertical axis of the cylindrical section of the reactor;

wherein the reactor upper section is configured for disengagement of steam from the reactor, and wherein the reactor upper section has a first outlet for collecting the neutralized product and a second outlet connected to the injection pipe, such that neutralized product is recycled through the injection pipe back into the cylindrical section;

into a system according to the present disclosure, comprising the steps of:

- removing the acid sparger;
- removing the injection pipe;
- providing a vertical section to the injection pipe and inserting the removed sparger inside the vertical section in such a way that the sparger is coaxially arranged inside the vertical section and preferably such that the longest distance between the uppermost holes and the uppermost end of the vertical section ranges from 2 to 10 times the diameter of the vertical section of the injection pipe; and
- reconnecting the injection pipe comprising the vertical section with the reinserted sparger, via the vertical section to the inlet of the reactor, such that the acid sparger and the vertical section of the injection pipe are coaxially arranged with the vertical axis of the cylindrical section of the reactor.

**Description of the Figures**

Figure 1: lower cylindrical section of an ammonium nitrate reactor according to a comparative example.
Figure 2: lower cylindrical section of an ammonium nitrate reactor according to the disclosure.
Figure 3: schematic representation of an ammonium nitrate reactor.

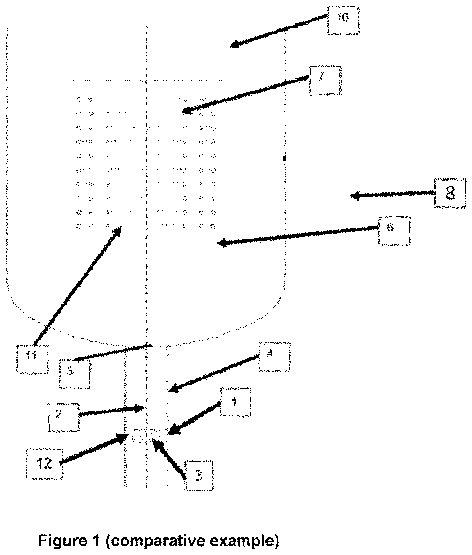

List of references for Figures 1, 2 and 3

1 - acid sparger; 2 - vertical axis; 3 - holes of the acid sparger; 4 - injection pipe; 5 - inlet of the reactor; 6 - bottom section of the cylindrical section of the reactor; 7 - holes of the circular rings; 8 - lower cylindrical section of the reactor; 9 - reactor; 10 - top section of the cylindrical section of the reactor; 11 - circular rings; 12 - gap between the end of the ammonium nitrate (AN) sparger and the walls of the AN pipe; 13 - upper section of the reactor; 14 - steam outlet; 15 - outlet for non-recycled ammonium nitrate.

**Detailed description**

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging between ... to ..." or "range from ... to ..." or "up to" as used when referring to a range for a measurable value, such as a parameter, an amount, a time period, and the like, is intended to include the limits associated to the range that is disclosed.

In one aspect of the disclosure, a system for reacting an acid with a base, thereby providing a neutralized product and steam, is disclosed. The system comprises:

- a reactor for reacting the base and the acid, comprising a cylindrical section defining a central vertical axis in the lower section of the reactor and comprising a reactor upper section located on top of the cylindrical lower section, wherein said cylindrical section comprises a top and a bottom section. It is understood that the cylindrical section of the reactor is enclosed by a corresponding circular wall.

- a base distribution system comprising one or more horizontal circular rings on top of each other, located in the bottom section of the cylindrical section, concentric around the vertical axis and comprising holes arranged for introducing the base along the height and towards the center of the cylindrical section;
- an injection pipe comprising a vertical section located below the cylindrical section of the reactor, wherein the vertical section is connected to the bottom section located below the base distribution system at an inlet of the reactor;
- an acid sparger located inside the vertical section of the injection pipe, wherein the acid sparger comprises holes arranged for uniformly sparging the acid inside the injection pipe;

wherein the reactor upper section is configured for disengagement of steam, and where the reactor upper section has a first outlet for collecting the neutralized product and a second outlet connected to the injection pipe, such that neutralized product is recycled through the injection pipe back into the cylindrical section.

The system is characterized in that the acid sparger and the injection pipe are coaxially arranged with the vertical axis of the cylindrical section of the reactor.

The inventors have realized that by having the acid sparger and the injection pipe concentric around the vertical axis, the acid is diluted in the neutralized product, and a homogeneous mixture is obtained, in particular such that the pH and the temperature of the mixture of the acid and the neutralized product mixture entering the cylindrical section of the reactor is, in turn, such that the base distribution system is not corroded by the mixture. Further, the mixing of the mixture of the neutralized product and the acid with the base distributed inside the reactor is favoured, such that the formation of the neutralized product is, in turn, favoured.

In one embodiment according to the system of the disclosure, the distribution system is made of titanium. By using titanium, the corrosion of the base distribution system and of the inside of the reactor is reduced.

In one embodiment according to the system of the disclosure, the base is ammonia, the acid is nitric acid and the neutralized product is ammonium nitrate.

With the system according to the disclosure, it is possible to react nitric acid with ammonia in order to produce ammonium nitrate, that is a valuable product. The system of the disclosure is especially suited for the production of ammonium nitrate as it is particularly important to control the pH and the temperature of the mixture of nitric acid and ammonium nitrate, not only to avoid corrosion of the internals of the reactor, but also to ensure an optimal and safe reaction of the acid with the base: as this reaction is very exothermic, it is important to control it and ensure that the acid and the base do not react too violently, leading to the creation of hot spots in the reactor. Typically, in an ammonium nitrate reactor, the temperature ranges from 150 et 180 °C and the pH ranges from 3 to 5.5. Further, the control of the pH ensures that the chemical equilibrium is reached such that the yield of ammonium nitrate is maximized.

In one embodiment according to the system of the disclosure, the number of rings of the base distribution system ranges from 1 to10. In particular, the base distribution system comprises multiple or a stack of horizontal circular rings, wherein the number of rings ranges from 2 to 10. More in particular, the number of rings ranges from 5 to 10. Even more in particular, the number of rings is 10.

When the number of rings is optimised in this manner, the base is optimally distributed inside the reactor. In particular, the base is optimally and uniformly distributed along the height of the cylindrical section of the reactor. This means that the mixing between the acid and the base is optimised. No unreacted base in the gaseous state, for example ammonia, is lost in the upper section of the reactor. Further, the base is sparged at an optimal location in the reactor such that the mixing of the base and the acid is controlled, meaning that no hot spots in the reactor are created.

In one embodiment according to the system of the disclosure, the rings have the same diameter, the overall distribution of the holes in the distribution system is symmetrical with respect to the vertical axis, such that the base is uniformly distributed upwards, along the height and towards the center of the cylindrical section.

With such distribution of the base, it is optimally mixed and reacted with the acid diluted with the neutralized product. Such distribution of the base provides for the control of the pH and the temperature of the mixture of the acid and the base, not only to avoid corrosion of the internals of the reactor, but also to ensure an optimal and safe reaction of the acid with the base: as this reaction is very exothermic, it is important to control it and ensure that the acid and the base do not react too violently, leading to the creation of hot spots in the reactor.

In one embodiment according to the system of the disclosure, the cylindrical section has a height to diameter ratio ranging from 1.3 to 2.7, the vertical section of the injection pipe has a height, i.e. the length of the vertical section, to diameter ratio ranging from 2.3 to 5.6 and the acid sparger has a height, i.e. the length of the sparger, to diameter ratio ranging from 1.0 to 1.4.

With such a system, it is ensured that the recycled neutralized product is uniformly distributed in the vertical section of the injection pipe, before it mixes with the acid sparged in the injection pipe. Consequently, the mixture of the acid and the neutralized product injected at the inlet of the reactor is homogenous. Hence, there is neither acid spot nor hot spot in the mixture entering the reactor and the pH and temperature of the reaction inside the reactor are well controlled. This control is further enhanced by the control of the distribution of the base inside the reactor.

In one embodiment according to the system of the disclosure, the distance between the uppermost holes of the acid sparger and the inlet of the reactor ranges from 2 to 10 times the diameter of the vertical section of the injection pipe.

In particular, the distance between the uppermost holes of the acid sparger and the inlet of the reactor ranges from 5 to 10 times the diameter of the vertical section of the injection pipe.

More in particular, the distance between the uppermost holes of the acid sparger and the inlet of the reactor ranges from 7 to 10 times the diameter of the vertical section of the injection pipe.

Even more in particular, the distance between the uppermost holes of the acid sparger and the inlet of the reactor is 10 times the diameter of the vertical section of the injection pipe.

In this manner, it is ensured that the neutralized product is flowing uniformly through the vertical section of the injection pipe before it mixes with the acid. This is of particular benefit when the neutralized product cannot be recycled from the upper section of the reactor back into the lower cylindrical section of the reactor through a unidirectional flow, that is a unidirectional injection pipe: the injection pipe then comprises a U-tube section upstream the vertical section of the injection pipe and the distribution of the neutralized product at the entrance of the vertical section of the injection pipe is not uniform. Not only then is it of benefit to have a sufficiently long residence time in the vertical section for the distribution of the neutralized product to homogenise before entering the reactor: it is also of benefit to have the acid sparger optimally positioned within the vertical section of the injection pipe, that is such that it mixes with an already homogeneous flow of neutralized product and that, through the remaining residence time in the vertical section of the injection pipe, an homogenous mixture of the neutralized product and the acid is achieved.

In one embodiment according to the system of the disclosure, the reactor is configured for separating the steam from the neutralized product in the upper section of the reactor, such that the neutralized product flows inside the reactor downwards to the bottom section of the cylindrical section.

The reaction between the acid and the base is very exothermic and, therefore, generates heat in the form of steam, that is water in the gas phase. The thereby generated gas flows upwards in the reactor and, along with it, pushes any acid, base and neutralized product in the upwards direction, which favours the reaction of any unreacted acid with unreacted base. If the system is configured for separating the gas from any acid, base and neutralized product in the upper section of the reactor, the gas with a lighter density can be collected outside the reactor, whereas the denser acid, base and neutralized product flows back, downwards, that is towards the cylindrical, bottom section of the reactor. This further favours the acid-base reaction and also the mixing of the components within the reactor which contributes to homogenizing the content inside the reactor. In this manner a loop shaped flow-path is created within the reactor.

As an example, a vertical draft tube in the form of a baffle can be used as a mean to offer an increased liquid-gas interface at the top of the reactor. When two such baffles are vertically and symmetrically disposed with respect to the vertical axis, the above described upwards and downwards trajectories for the neutralized product can be realized.

In one aspect of the disclosure, a method for producing a neutralized product in a system according to the system of the disclosure, is disclosed. The method comprises the steps of injecting the base in the distribution system, injecting the acid in the acid sparger and recycling the neutralized product from inside the cylindrical section into the injection pipe and back into the cylindrical section.

The inventors have realized that by recycling the neutralized product and injecting the acid in the system of the disclosure, the acid is diluted in the neutralized product, such that the pH and the temperature of the mixture of the acid and the neutralized product mixture entering the cylindrical section of the reactor is, in turn, such that the base distribution system is not corroded by the mixture. Further, the mixing of the mixture of the neutralized product and the acid with the base distributed inside the reactor is favoured, such that the formation of the neutralized product is, in turn, favoured.

In one embodiment according to the method of the disclosure, the base is ammonia, the acid is nitric acid and the neutralized product is ammonium nitrate.

With the method the disclosure, it is possible to react nitric acid with ammonia in order to produce ammonium nitrate, that is a valuable compound, e.g. a valuable fertilizer. The method of the disclosure is especially suited for the production of ammonium nitrate as it is particularly important to control the pH and the temperature of the mixture of nitric acid and ammonium nitrate, not only to avoid corrosion of the internals of the reactor, but also to ensure an optimal and safe reaction of the acid with the base: as this reaction is very exothermic, it is important to control it and ensure that the acid and the base do not react too violently.

In one embodiment according to the method of the disclosure, the acid is injected after dilution in water such that the acid injected is 60% by weight of the acid in water, at a temperature ranging from 20 to 45 °C, the base is injected at a mass flow rate equal to 0.15 to 0.17 times the mass flow rate for the diluted acid and at a temperature ranging from 60 to 90 °C, and the neutralized product is flowing is flowing in the injection pipe at a flow ranging from 1 to 2.6 times the mass flow rate for the diluted acid.

In this manner, it is ensured the pH and the temperature of the mixture of the acid and the neutralized product are controlled, such that the temperature and the pH inside the reactor, upon reaction with the ammonia, are controlled.

In one embodiment according to the method of the disclosure, the method further comprises the step of introducing a coolant in the reactor, by mixing the coolant with the neutralized product being recycled or introducing the coolant inside the injection pipe, or introducing the coolant directly inside the reactor, such as to control the temperature inside the reactor between 150 and 180 °C.

By introducing a coolant, it is ensured the pH and the temperature of the mixture of the acid and the neutralized product are controlled, such that the temperature and the pH inside the reactor, upon reaction with the ammonia, are controlled. Conveniently, the coolant can be water below the temperature inside the reactor.

In one embodiment according to the method of the disclosure, the sparged acid and the neutralized product reside from 1.2 to 2.1 seconds between the uppermost holes of the acid sparger and inlet of the reactor.

In this manner, it is ensured that the mixture of the acid and the neutralized product injected in the cylindrical section of the reactor is homogenous. Hence, there is neither acid spot nor hot spot in the mixture entering the reactor and the pH and temperature of the reaction inside the reactor are well controlled. This control is further enhanced by the control of the distribution of the base inside the reactor.

It is of particular benefit to ensure that the neutralized product is flowing uniformly through the vertical section of the injection pipe before it mixes with the acid, when the neutralized product cannot be recycled from the upper section of the reactor back into the lower cylindrical section of the reactor through a unidirectional flow, that is a unidirectional injection pipe: the injection pipe then comprises a U-tube section upstream the vertical section of the injection pipe and the distribution of the neutralized product at the entrance of the vertical section of the injection pipe is not uniform. Not only then is it of benefit to have a sufficiently long residence time in the vertical section for the distribution of the neutralized product to homogenize before entering the reactor: it is also of benefit to have the acid sparger optimally positioned within the vertical section of the injection pipe, that is such that it mixes with an already neutralized flow of neutralized product and that, through the remaining residence time in the vertical section of the injection pipe, an homogenous mixture of the neutralized product and the acid is achieved.

In one aspect of the disclosure, the use of the system of the disclosure for performing the method of the disclosure is disclosed.

In one aspect of the disclosure, a method for revamping a system for reacting a base and an acid, comprising:

- a reactor for reacting the base and the acid, comprising a cylindrical lower section defining a central vertical axis and comprising a reactor upper section located on top of the cylindrical section, wherein said cylindrical section comprises a top and a bottom section;;
- a base distribution system comprising horizontal circular rings on top of each other, located in the bottom section of the cylindrical section cylindrical section, concentric around the vertical axis and comprising holes arranged for introducing the base along the height and towards the center of the cylindrical section;
- an injection pipe connected to the bottom section located below the distribution system at an inlet of the reactor;
- an acid sparger located inside the injection pipe, wherein the acid sparger comprises holes arranged for uniformly sparging the acid inside the injection pipe, wherein the sparger is inclined with respect to the vertical axis of the cylindrical section of the reactor;
  wherein the reactor upper section is configured for disengagement of steam from the reactor, and wherein the reactor upper section has a first outlet for collecting the neutralized product and a second outlet connected to the injection pipe, such that neutralized product is recycled through the injection pipe back into the cylindrical section;

into a system according to the present disclosure is disclosed. The method of revamping comprises the steps of:

- removing the acid sparger;
- removing the injection pipe;
- providing a vertical section to the injection pipe and inserting the removed sparger inside the vertical section in such a way that the sparger is coaxially arranged inside the vertical section and preferably such that the longest distance between the uppermost holes and the uppermost end of the vertical section ranges from 2 to 10 times the diameter of the vertical section of the injection pipe; and
- reconnecting the injection pipe comprising the vertical section with the reinserted sparger, via the vertical section to the inlet of the reactor, such that the acid sparger and the vertical section of the injection pipe are coaxially arranged with the vertical axis of the cylindrical section of the reactor.

Examples

***Inclined nitric acid injection (comparative example)***

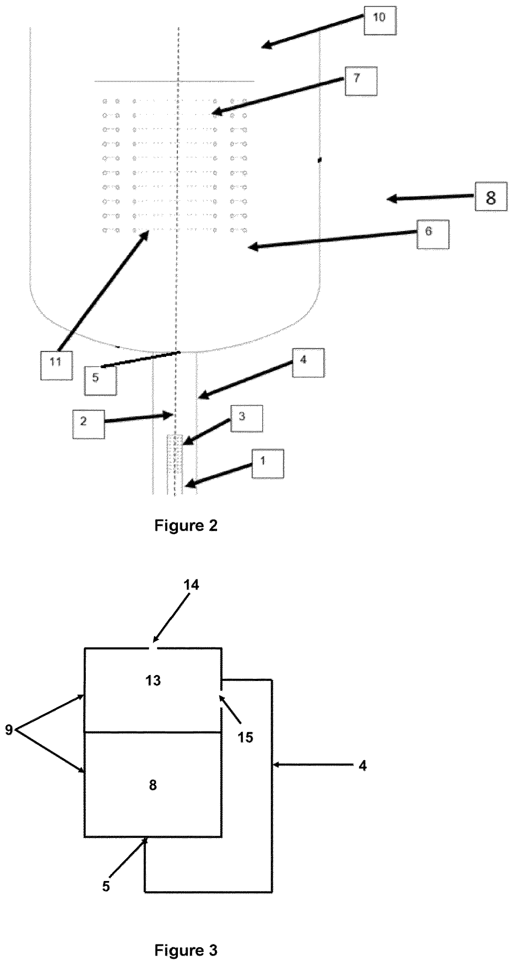

Reference is made to Figures 1 and 3. Ammonium nitrate was produced by reacting nitric acid with ammonia in a reactor (9). The reactor had a lower cylindrical section (8) comprising in turn a top (10) and a bottom (6) section and a circular wall (not shown) extending along both the top (10) and bottom (6) sections. This cylindrical section (8) defined a central vertical axis (2) and had a height to diameter ratio of 1.3. The cylindrical section (8) further comprised, in its bottom section (6) circular rings (11) disposed on top of each other and of similar diameter. The rings (11) comprised holes (7) arranged for distribution of ammonia along the height and towards the centre of the cylindrical section (8). The overall distribution of the holes (7) in the rings (11) was symmetrical with respect to the vertical axis (2), such that the base was uniformly distributed along the height and towards the center of the cylindrical section (8). The reactor (9) further comprised a tubular acid sparger (1) located inside the vertical section of an injection pipe (4) located below the cylindrical section (8) of the reactor and connected to an inlet (5) located below the rings (11). The acid sparger comprised holes (3) arranged for uniformly sparging the acid inside the injection pipe (4). The ammonium nitrate produced in the reactor (9) was recycled through the injection pipe (4) from the upper section of the reactor (13) back into the lower cylindrical section (8) of the reactor (9). The vertical section of the injection pipe (4) was coaxially arranged around the vertical axis (2) and had a height to diameter ratio of 3.3. The acid sparger (1) was inclined at an angle of 90 ° with respect to the vertical axis (2) and had a height to diameter ratio of 1.4. Further, there was a gap (12) between the acid sparger (1) and the injection pipe (4). Nitric acid was diluted in water such as to produce 60% by weight nitric acid in water and the diluted nitric acid then was injected from the holes (3) of the tubular sparger (1). Ammonia was injected from the holes (7) of the circular rings (11) at a mass flow rate of 0.16 time that for the dilute nitric acid. Ammonium nitrate produced in the upper section (13) of the reactor (9) was recycled back into the lower cylindrical section (8) through the injection pipe (4), at a mass flow rate of 2 times that for the dilute nitric acid. Corrosion and even destruction of the distribution rings was observed.

### *Vertical nitric acid injection*

Reference is made to Figures 2 and 3. Ammonium nitrate was produced by reacting nitric acid with ammonia in a reactor (9). The reactor had a lower cylindrical section (8) comprising in turn a top (10) and a bottom (6) section and a circular wall (not shown) extending along both the top (10) and bottom (6) sections. This cylindrical section (8) defined a central vertical axis (2) and had a height to diameter ratio of 1.3. The cylindrical section (8) further comprised, in its bottom section (6) circular rings (11) disposed on top of each other and of similar diameter. The rings (11) comprised holes (7) arranged for distribution of ammonia along the height and towards the centre of the cylindrical section (8). The overall distribution of the holes (7) in the rings (11) was symmetrical with respect to the vertical axis (2), such that the base was uniformly distributed along the height and towards the centre of the cylindrical section (8). The reactor (9) further comprised a tubular acid sparger (1) located inside the vertical section of an injection pipe (4) located below the cylindrical section (8) of the reactor and connected to an inlet (5) located below the rings (11). The acid sparger comprised holes (3) arranged for uniformly sparging the acid inside the injection pipe (4). The ammonium nitrate produced in the reactor (9) was recycled through the injection pipe (4) from the upper section of the reactor (13) back into the lower cylindrical section (8) of the reactor (9). The vertical section of the injection pipe (4) was concentric around the vertical axis (2) and had a height to diameter ratio of 3.3. The acid sparger (1) and the injection pipe (4) were coaxially arranged around the vertical axis (2) and had a height to diameter ratio of respectively 3.3 and 1.4. Nitric acid was diluted in water such as to produce 60% by weight nitric acid in water and the diluted nitric acid then was injected from the holes (3) of the tubular sparger (1). Ammonia was injected from the holes (7) of the circular rings (11) at a mass flow rate of 0.16 time that for the dilute nitric acid. Ammonium nitrate produced in the upper section (13) of the reactor (9) was recycled back into the lower cylindrical section (8) through the injection pipe (4), at a mass flow rate of 2 times that for the dilute nitric acid. No corrosion or destruction of the distribution rings was observed.

### Claims

1.  A system for reacting an acid with a base, thereby providing a neutralized product and steam, comprising:

    - a reactor for reacting the base and the acid, comprising a cylindrical section defining a central vertical axis in the lower section of the reactor and comprising a reactor upper section located on top of the cylindrical section, wherein said cylindrical section comprises a top and a bottom section;
    - a base distribution system comprising horizontal circular rings on top of each other, located in the bottom section of the cylindrical section, concentric around the vertical axis and comprising holes arranged for introducing the base along the height and towards the center of the cylindrical section;
    - an injection pipe comprising a vertical section located below the cylindrical section of the reactor, wherein the vertical section is connected to the bottom section located below the base distribution system at an inlet of the reactor;
    - an acid sparger located inside the vertical section of the injection pipe, wherein the acid sparger comprises holes arranged for uniformly sparging the acid inside the injection pipe;

wherein the reactor upper section is configured for disengagement of steam from the reactor, and wherein the reactor upper section has a first outlet for collecting the neutralized product and a second outlet connected to the injection pipe, such that neutralized product is recycled through the injection pipe back into the cylindrical section; **characterized in that** the acid sparger and the vertical section of the injection pipe are coaxially arranged with the vertical axis of the cylindrical section of the reactor.

2. The system according to claim 1, wherein the base distribution system is made of titanium.

3. The system according to any one of claims 1 to 2, wherein the base is ammonia, and wherein the acid is nitric acid, and wherein the neutralized product is ammonium nitrate.

4. The system according to any one of claims 1 to 3, wherein the number of rings ranges from 1 to 10.

5. The system according to claim 4, wherein the rings have the same diameter, and wherein the overall distribution of the holes in the distribution system is symmetrical with respect to the vertical axis, such that the base is uniformly distributed upwards along the height and towards the center of the cylindrical section.

6. The system according to any one of claims 1 to 5, wherein:

the cylindrical section has height to diameter ratio ranging from 1.3 to 2.7;
the vertical section of the injection pipe has a height to diameter ratio ranging from 2.3 to 5.6; and
the acid sparger has a height to diameter ratio ranging from 1 to 1.4.

7. The system according to claim 6, wherein the distance between the uppermost holes of the acid sparger and the inlet of the reactor ranges from 2 to 10 times the diameter of the vertical section of the injection pipe.

8. The system according to any one of claims 1 to 6, wherein the reactor is configured for separating the steam from the neutralized product in the reactor upper section and for generating a flow of the neutralized product inside the reactor downwards to the bottom section of the cylindrical section.

9. A method for producing a neutralized product in a system according to any one of claims 1 to 8, comprising the steps of:

- injecting the base in the distribution system;
- injecting the acid in the acid sparger; and
- recycling the neutralized product from inside the cylindrical section into the injection pipe and back into the cylindrical section.

10. The method according to claim 9, wherein the base is ammonia, and wherein the acid is nitric acid, and wherein the neutralized product is ammonium nitrate.

11. The method according to any one of claims 9 to 10, wherein the acid is injected after dilution in water such that the acid injected is 60% by weight of the acid in water, at a temperature ranging from 20 to 45 °C, wherein the base is injected at a mass flow rate equal to 0.15 to 0.17 times the mass flow rate for the diluted acid and at a temperature ranging from 60 to 90 °C, and wherein the neutralized product is flowing in the injection pipe at a mass flow rate ranging from 1 to 2.6 times the mass flow rate for the diluted acid.

12. The method according to any one of claims 9 to 11, further comprising the step of introducing a coolant in the reactor, by mixing the coolant with the neutralized product being recycled or introducing the coolant inside the injection pipe, or introducing the coolant directly inside the reactor, such as to control the temperature inside the reactor between 150 and 180 °C.

13. The method according to any one of claims 9 to 12, wherein the sparged acid and the neutralized product reside from 1.2 to 2.1 seconds between the uppermost holes of the acid sparger and the inlet of the reactor.

14. Use of the system according to any one of claims 1 to 8 for performing the method according to any one of claims 9 to 13.

**15.** A method for revamping a system for reacting a base and an acid, comprising:

- a reactor for reacting the base and the acid, comprising a cylindrical lower section defining a central vertical axis and comprising a reactor upper section located on top of the cylindrical section, wherein said cylindrical section comprises a top and a bottom section;;
- a base distribution system comprising horizontal circular rings on top of each other, located in the bottom section of the cylindrical section cylindrical section, concentric around the vertical axis and comprising holes arranged for introducing the base along the height and towards the center of the cylindrical section;
- an injection pipe connected to the bottom section located below the distribution system at an inlet of the reactor;
- an acid sparger located inside the injection pipe, wherein the acid sparger comprises holes arranged for uniformly sparging the acid inside the injection pipe, wherein the sparger is inclined with respect to the vertical axis of the cylindrical section of the reactor;

wherein the reactor upper section is configured for disengagement of steam from the reactor, and wherein the reactor upper section has a first outlet for collecting the neutralized product and a second outlet connected to the injection pipe, such that neutralized product is recycled through the injection pipe back into the cylindrical section;

into a system according to any one of claims 1 to 8, comprising the steps of:

- removing the acid sparger;
- removing the injection pipe;
- providing a vertical section to the injection pipe and inserting the removed sparger inside the vertical section in such a way that the sparger is coaxially arranged inside the vertical section and preferably such that the longest distance between the uppermost holes and the uppermost end of the vertical section ranges from 2 to 10 times the diameter of the vertical section of the injection pipe; and
- reconnecting the injection pipe comprising the vertical section with the reinserted sparger, via the vertical section to the inlet of the reactor, such that the acid sparger and the vertical section of the injection pipe are coaxially arranged with the vertical axis of the cylindrical section of the reactor.

**Figure 1 (comparative example)**

**Figure 2**

**Figure 3**

Europäisches
Patentamt

European
Patent Office

Office européen
des brevets

# EUROPEAN SEARCH REPORT

Application Number

EP 23 16 8249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/072605 A1 (RAJA KANUPARTHY NAGA [IN] ET AL) 9 March 2023 (2023-03-09) * figure 1 * ----- | 1-15 | INV. B01J4/00 B01J19/02 C01B21/38 |
| A | AU 654 632 B1 (UHDE GMBH) 10 November 1994 (1994-11-10) * page 2, line 12 - line 16; figure 1 * ----- | 1-15 | C01C1/18 C02F1/66 C05C1/00 |
| A | KR 2008 0081950 A (EASTMAN CHEM CO [US]) 10 September 2008 (2008-09-10) * paragraph [0236] * ----- | 1-15 | |
| A | US 2018/280921 A1 (AVAGLIANO UGO [IT] ET AL) 4 October 2018 (2018-10-04) * figure 6 * ----- | 1-15 | |

TECHNICAL FIELDS
SEARCHED      (IPC)

B01J
C02F
C05G
C01C
C01B
C05C

The present search report has been drawn up for all claims

| Place of search | Date of completion of the search | Examiner |
|---|---|---|
| Munich | 22 August 2023 | Pasanisi, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 8249

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2023

| Patent document cited in search report | | Publication date | Patent family member(s) | | Publication date |
|---|---|---|---|---|---|
| US 2023072605 | A1 | 09-03-2023 | CA | 3167970 A1 | 19-08-2021 |
| | | | EP | 4103316 A1 | 21-12-2022 |
| | | | US | 2023072605 A1 | 09-03-2023 |
| | | | WO | 2021161344 A1 | 19-08-2021 |
| AU 654632 | B1 | 10-11-1994 | NONE | | |
| KR 20080081950 | A | 10-09-2008 | BR | PI0620840 A2 | 30-08-2016 |
| | | | CA | 2635357 A1 | 19-07-2007 |
| | | | CN | 101360553 A | 04-02-2009 |
| | | | EP | 1971425 A1 | 24-09-2008 |
| | | | KR | 20080081950 A | 10-09-2008 |
| | | | MY | 149963 A | 15-11-2013 |
| | | | US | 2007155986 A1 | 05-07-2007 |
| | | | WO | 2007081513 A1 | 19-07-2007 |
| US 2018280921 | A1 | 04-10-2018 | CN | 107660159 A | 02-02-2018 |
| | | | EP | 3277418 A1 | 07-02-2018 |
| | | | ES | 2728568 T3 | 25-10-2019 |
| | | | JP | 6821592 B2 | 27-01-2021 |
| | | | JP | 2018511603 A | 26-04-2018 |
| | | | RU | 2017134669 A | 04-04-2019 |
| | | | US | 2018280921 A1 | 04-10-2018 |
| | | | WO | 2016157154 A1 | 06-10-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 654632 B1, Thyssenkrupp